# EUROPÄISCHE PATENTSCHRIFT

(11) **EP 1 419 851 B1**
(45) Veröffentlichungstag und Bekanntmachung des Hinweises auf die Patenterteilung: **25.01.2006**
(21) Anmeldenummer: 03025405.6
(22) Anmeldetag: 05.11.2003
(51) Int. Cl.: B23Q 1/25, B23Q 1/54, B25J 17/02, B23Q 11/08, B23Q 1/01

(54) **Werkzeugmaschine mit Arbeitsspindel auf einer Tripoden-Einheit**
Machine tool with spindle head on a tripod unit
Machine-outil avec broche montée sur une unité tripode

(30) Priorität: 13.11.2002 DE 10252824
(43) Veröffentlichungstag der Anmeldung: 19.05.2004
(60) Teilanmeldung: 05008647.9
(73) Patentinhaber: DECKEL MAHO Pfronten GmbH, 87459 Pfronten (DE)
(72) Erfinder: Gronbach, Hans, 87637 Eisenberg (DE)
(74) Vertreter: Beetz & Partner

(56) Entgegenhaltungen:
- WO-A-02/072308
- DE-A- 19 645 324
- DE-U- 29 801 236
- US-A1- 2003 049 087
- US-B1- 6 428 452

## Beschreibung

Die Erfindung betrifft eine Werkzeugmaschine zur spanenden Bearbeitung von großflächigen hochkant stehenden Werkstücken nach dem Oberbegriff des Anspruchs 1 (siehe, z.B. DE- 298 01236-U).

Derartige Werkzeugmaschinen bzw. Bearbeitungszentren werden in neuerer Zeit zur Fräs- und Bohrbearbeitung von großen, insbesondere großflächigen Werkstücken in der Automobilindustrie, im Flugzeugbau, od. dgl., eingesetzt. In der Regel sind jeder Maschine zwei Werkstückstationen zugehörig, die an der Rückseite des Langbetts nebeneinander angeordnet sind und deren großflächige Werkstückträger wechselweise aus einer horizontalen Rüststellung ein eine vertikale Arbeitsstellung geschwenkt werden. Dies ermöglicht einen durchgehenden Produktionsbetrieb, da die in der Vertikalstellung befindlichen Werkstücke bearbeitet und gleichzeitig bereits bearbeitete Werkstücke von dem in seiner Horizontalstellung befindlichen Werkstückträger abgebaut oder neue Werkstücke auf diesen aufgebaut werden können. Zum Verschwenken der im wesentlichen plattenförmigen Werkstückträger werden vorzugsweise ausreichend lange Druckmittelzylinder verwendet, die rückseitig angreifen. Die Länge des Bettes und der darauf montierten Führungen ist so gewählt, daß der Fahrständer wechselweise vor die eine oder andere Station verfahren kann. Bei der Bearbeitung der großflächigen Werkstücke ergibt sich häufig ein extrem hoher Späneanfall aufgrund der hohen Spanleistungen der eingesetzten Bearbeitungseinheiten. Um die Umgebung der Maschine vor Verschmutzungen durch Späne und Flüssigkeiten zu schützen, sind die Arbeitsbereiche vor den beiden Stätionen von einer-durchgehenden Schutzkabine umgeben. Zusätzlich ist der Arbeitsbereich vor dem in seine horizontale Rüststellung verschwenkten Werkstückträger durch eine Tür abgetrennt, um Verschmutzungen der Rüststation durch Späneflug und Flüssigkeiten zu verhindern. Bisherige Maschinen dieses Types verwenden konventionelle Fahrständer, bei denen der die Bearbeitungseinheit bildende Fräskopf in einem in einer Koordinatenachse verfahrbaren Schlitten angeordnet ist, wobei die Arbeitsspindel Bewegungen in ihrer Längsachse in der Bearbeitungseinheit ausführen kann. Diese in der Praxis seit langem bewährten Maschinen sind hinsichtlich einer optimalen Ausnutzung der jeweiligen Arbeitsräume begrenzt. Daneben wurden auch bereits Vorschläge für nach dem Hexapodenprinzip konzipierte Werkzeugmaschinen des vorgenannten Typs gemacht, die allerdings wegen Problemen bezüglich einer genauen und hochstabilen Werkzeugpositionierung während der Bearbeitung noch keinen Eingang in die Praxis gefunden haben.

Aufgabe der Erfindung ist es, eine gattungsgemäße Werkzeugmaschine zur spanenden Bearbeitung von großflächigen hochkant stehenden Werkstücken zu schaffen, die bei relativ einfachem konstruktivem Aufbau eine präzise und auch unter Betriebsbeanspruchungen hochfeste Positionierung der jeweiligen Werkzeuge in einem vergrößerten Arbeitsraum ermöglicht.

Diese Aufgabe wird erfindungsgemäß durch eine Werkzeugmaschine nach Anspruch 1 gelöst.

Die längsverschiebbare Lagerung des in sich hochsteifen Tragrohres in dem etwa mittig im Fahrständer angeordneten Universallager ergibt in Verbindung mit der Wirkungsweise der drei Teleskopstützen eine hochgenaue und feste Positionierung des Bearbeitungskopfes bzw. des in die Arbeitsspindel eingesetzten Werkzeuges in einer vorgegebenen Arbeitsposition. Daneben ermöglicht das Tripodenprinzip eine optimierte Ausnutzung des verfügbaren Arbeitsraumes, da das jeweilige Werkzeug durch einfache Verschiebebewegungen der Teleskopstützen und des Tragrohrs innerhalb eines vergrößerten Arbeitsbereichs auch in Extremlagen genau positioniert werden kann. Daneben ergibt sich ein verminderter Platzbedarf gegenüber herkömmlichen Maschinen vergleichbarer Leistung.

In zweckmäßiger Weiterbildung der Erfindung kann die Werkzeugmaschine zwei wechselweise Rüst- und Arbeitsstationen aufweisen, die in der X-Koordinatenachse hintereinander angeordnet sind, wobei jede Station je einen schwenkbaren Werkzeugträger aufweist und der jeweilige Rüstraum durch eine bewegbare Tür vom Arbeitsbereich abgetrennt ist. Diese Tür ist eine einteilige Schiebetüre, die wechselweise vor den jeweils niedergeschwenkten Werkstückträger verschoben wird, so daß die eine Hälfte des Arbeitsbereiches durch den in seiner Hochkantstellung befindlichen Werkstückträger und die andere Hälfte des Arbeitsbereiches durch die Schiebetüre von der Umgebung abgetrennt ist.

Um einen bei modernen Bearbeitungszentren üblichen automatisierten Ablauf der verschiedenen Bearbeitungsvorgänge zu gewährleisten, ist die Schiebetür zweckmäßigerweise mittels eines programmgesteuerten Linearantriebs, z.B. eines Druckmittelzyliners, eines elektrischen Linearmotors, eines Spindeltriebs, eines Riementriebs, od. dgl., verschiebbar.

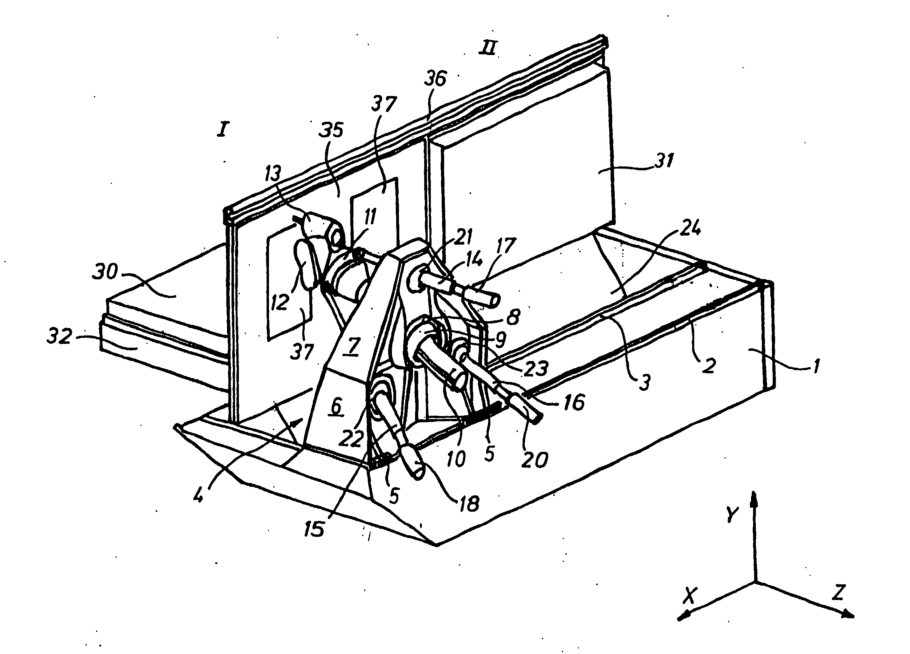

Im folgenden wird ein bevorzugtes Ausführungsbeispiel der Erfindung anhand der Zeichnung ausführlicher beschrieben, in der die erfindungsgemäße Werkzeugmaschine in perspektivischer Schrägansicht schematisch dargestellt ist.

Die dargestellte Werkzeugmaschine enthält ein relativ flaches Langbett 1, auf dessen Oberseite zwei Führungsschienen 2, 3 montiert sind. Auf diesen Führungsschienen 2, 3 ist ein Fahrständer 4 mittels eines - nicht dargestellten - Linearantriebs, z.B. eines Spindeltriebs, eines elektrischen Linearmotors od. dgl., in Richtung der durch die Erstreckung der Führungsschienen 2, 3 vorgegebenen Koordinatenachse X verfahrbar. Dieser Fahrständer 4 hat in Stirnansicht etwa die Form eines Hauses und weist einen mit Fürungsschuhen 5 versehenen breiteren Unterbau 6 sowie einen sich dachartig nach oben verjüngenden Oberteil 7 auf. In dem von den Außenwänden umgrenzten Innenbereich des Fahrständers befinden sich Zwischenwände und Versteifungsrippen, so daß sich eine insgesamt hochsteife Gesamtkonstruktion ergibt. Etwa im mittleren Teil des Fahrständers 4 ist in einer Ausnehmung 8 ein Universallager 9 angeordnet, in welchem ein in sich formsteifes Tragrohr 10 längs verschiebbar aufgenommen ist. Das in der Zeichnung obere Ende dieses Tragrohrs 10 ist als sich konisch erweiternde Glocke 11 ausgebildet, an welcher ein Schwenkkopf 12 um die Längsachse des Tragrohrs 10 verdrehbar montiert ist. Dieser Schwenkkopf 12 bildet den Träger für eine um eine zusätzliche Achse verschwenkbare Arbeitsspindel 13. Seitlich an der Glocke 11 sind ferner die ausfahrbaren Teile von drei Teleskopstützen 14, 15, 16 um mehrere Achsen beweglich befestigt, die über je einen z.B. hydraulischen Linearantrieb 17, 18, 20 verfügen. Diese drei Teleskopstützen sind um einen Winkel von jeweils 120° zur Längsachse des Tragrohres 10 versetzt angeordnet und in jeweils einem Universallager 21, 22, 23 im Fahrständer 4 gelagert. Die dargestellte Anordnung einer oberen 14 und zweier unterer 15, 16 Teleskopstützen wirkt sich günstig auf die Gesamtstabilität der Bearbeitungseinheit aus.

Die dargestellte Werkzeugmaschine enthält zwei Arbeits- bzw. Rüststationen I und II mit jeweils einem plattenförmigen Werkstückträger 30, 31, die an der Rückseite des Langbettes 1 nebeneinander positioniert sind. Beide Werkstückträger 30, 31 sind gesondert zwischen einer horizontalen und einer vertikalen Stellung verschwenkbar. In dem dargestellten Zustand befindet sich der Werkstückträger 30 der Station I in seiner horizontalen Lage, in welcher er auf einem Unterbau 32 aufliegt. In diesem Unterbau 32 befindet sich für jeden Werkstückträger 30 und 31 je ein - nicht dargestellter - Druckmittelzylinder, dessen Kolben an der Rückseite des jeweiligen Werkstückträgers angreift, um ihn aus der horizontalen in die vertikale Stellung - und umgekehrt - zu verschwenken. Zwischen dem sich über nahezu die gesamte Länge des Langbettes 1 erstreckenden Arbeitsraum der Bearbeitungseinheit und der wechselilden Rüststation I bzw. II, in welcher sich der zugehörige Werkstückträger in seiner horizontalen Position befindet, ist eine Schiebetür 35 angeordnet, die an oberen und - nicht dargestellten - unteren Längsschienen 36 mittels eines ebenfalls nicht dargestellten Linearantriebes verschiebbar ist. In dieser Schiebetür 35 sind Sichtfenster 37 ausgebildet.

Zur Bearbeitung eines an dem in seiner vertikalen Arbeitsstellung befindlichen Werkstückträger 31 aufgespannten Werkstücks wird der Fahrständer 4 in den Führungsschienen 2, 3 nach rechts verfahren, so daß sich die die Arbeitsspindel 13 enthaltende Bearbeitungseinheit vor dem am Werkstückträger 31 aufgespannten Werkstück befindet. Das Tripodenkonzept ermöglicht in Verbindung mit der drehbaren Halterung des Schwenkkopfes 12 und der verschwenkbaren Lagerung der Arbeitsspindel bzw. des Fräskopfes 13 eine Positionierung des jeweiligen Werkstückes auch vor den äußersten Eckbereichen des Werkstückträgers 31, wobei das in der Arbeitsspindel 13 eingespannte Werkzeug beliebige Winkellagen im Raum einnehmen kann. Die hohe Eigensteifigkeit des Tragrohres 11 und seine Abstützung über die drei Teleskopstützen 14, 15, 16 gewährleistet ferner eine genaue und stabile Positionierung des Spindelkopfes 13, so daß hohe Spanleistungen bei Einhaltung kleiner Toleranzen möglich sind.

Nach dem Bearbeitungsvorgang des am Werkstückträger 31 gespannten Werkstückes wird der Werkstückträger 31 mittels seines rückseitigen Stellantriebes in die Horizontallage zurückgeschwenkt. Der sich dadurch ergebende Freiraum wird durch Verschieben der Tür 35 nach rechts geschlossen. Daraufhin kann der mit dem neuen Werkstück versehene Werkstückträger 30 aus seiner dargestellten Horizontalstellung in eine vertikale Bearbeitungsposition verschwenkt werden und nach einer Verfahrbewegung des Fahrständers 4 in die - in der Zeichnung dargestellte - Position kann die Bearbeitung des neuen Werkstücks aufgenommen werden. Auch in diesem Fall ist der vordere Bearbeitungsraum von dem rückwärtigen Rüstraum einerseits durch die dann verschobene Schiebetür 35 und andererseits durch den dann aufrechtstehenden Werkstückträger 30 abgeschlossen.

Ein besonderer Vorzug der dargestellten Werkzeugmaschine ergibt sich hinsichtlich der Behandlung bzw. Abführung der im Betrieb mitunter in erheblichen Mengen anfallenden Späne, die zusammen mit den zugeführten Flüssigkeiten in eine unter dem Arbeitsraum vorgesehene langgestreckte Wanne 24 fallen, die die Form eines Spitztroges hat, in deren Bodenabschnitt ein herkömmlicher Späneförderer angeordnet ist.

Die Erfindung ist nicht auf das in der Zeichnung dargestellte Ausführungsbeispiel beschränkt. So kann statt der beiden in einer horizontalen Ebene angeordneten Führungsschienen 2, 3 das Langbett auch so ausgebildet sein, daß sich der Fahrständer an einer schrägen Ebene abstützt, wobei die vordere Führungsschiene 2 in einem höheren Niveau als die hintere Führungsschiene 3 verläuft. Ferner kann am erweiterten Endteil des Tragrohres auch ein anders gestalteter Fräskopf montiert werden, der eine Ausrichtung der Werkzeugspindel 13 in verschiedenen Raumwinkellagen ermöglicht. Zur Bearbeitung von Werkstücken extremer Längenausdehnung kann das Zweistationen-Konzept verlassen werden und statt der beiden gesonderten Werkstückträger 30, 31 ein einziger durchgehender Werkstückträger verwendet werden, wobei in diesem Fall dann die Schiebetür 35 nicht vorhanden ist.

## Patentansprüche

1. Werkzeugmaschine zur spanenden Bearbeitung von großflächigen hochkant stehenden Werkstücken mit
- einem in einer ersten Koordinatenachse auf einem Langbett (1) verfahrbaren Fahrständer (4),
- einer am Fahrständer (4) in mindestens zwei weiteren Koordinatenachsen bewegbaren Bearbeitungseinheit mit schwenkbarer Arbeitsspindel (13) und
- mindestens einem etwa plattenförmigen Werkstückträger (30; 31), der aus einer horizontalen Rüststellung in eine vertikale Bearbeitungsstellung schwenkbar ist,
**dadurch gekennzeichnet, dass**
- die Bearbeitungseinheit eine Tripoden-Einheit mit einem zentralen Tragrohr (10) und drei um 120 ° winkelversetzt angeordneten Teleskopstützen (14, 15, 16) ist,
- der Fahrständer (4) einen mit Führungsschuhen versehenen breiteren Unterbau (6) sowie einen sich dachartig nach oben verjüngenden Oberteil (7) aufweist,
- der Fahrständer (4) in einer mittleren Ausnehmung ein Universallager (9) für das längs verschiebbare Tragrohr (10) sowie in zwei unteren und einer oberen Ausnehmung je ein Universallager (21, 22, 23) für die Teleskopstützen (14, 15, 16) aufweist und
- am Ende des Tragrohrs (10) ein um die Rohrachse verdrehbarer Schwenkkopf (12) für die verschwenkbare Arbeitsspindel (13) angeordnet ist.

2. Werkzeugmaschine nach Anspruch 1,
**dadurch gekennzeichnet, dass**
der Fahrständer (4) mittels eines elektrischen Linearmotors auf dem Langbett (1) verfahrbar ist.

3. Werkzeugmaschine nach Anspruch 1 oder 2,
**dadurch gekennzeichnet, dass**
der Schwenkkopf (12) in einer am Ende des Tragrohrs (10) ausgebildeten Glocke (11) verdrehbar montiert ist und den Träger für die um eine zusätzliche Achse verschwenkbare Arbeitsspindel (13) bildet.

4. Werkzeugmaschine nach Anspruch 3,
**dadurch gekennzeichnet, dass**
seitlich an der Glocke (11) die hydraulisch ausfahrbaren Teile der drei Teleskopstützen (14, 15, 16) beweglich befestigt sind.

5. Werkzeugmaschine nach einem der vorstehenden Ansprüche,
**dadurch gekennzeichnet, dass**
hinter dem Langbett (1) zwei Rüst- und Arbeitsstationen (I und II) angeordnet sind, die je einen verschwenkbaren plattenförmigen Werkstückträger (30, 31) aufweisen und der jeweilige Rüstraum durch eine einteilige Schiebetür (35) vom Arbeitsbereich getrennt ist, die wechselweise vor den jeweils in seine horizontale Rüststellung niedergeschwenkten Werkstückträger (31, 32) verschiebbar ist.

## Claims

1. Machine tool for machining edge-wise arranged large-area work pieces, comprising
- a movable column (4) which can be moved on a long bed (1) along a first coordinate axis,
- a machining unit movable at the movable column (4) along at least two further coordinate axes and having a pivotable working spindle (13),
- at least one approximately plate-shaped work carrier (30; 31) which can be pivoted from a horizontal set-up position into a vertical machining position,
**characterized in that**
- the machining unit is a tripod unit having a central support pipe (10) and three telescopic legs (14, 15, 16) staggered at an angle of 120°,
- the movable column (4) has a wider base (6) provided with guide sockets as well as a roof-like upwardly tapering top portion (7)
- the movable column (4) comprises in a central recess a universal bearing (9) for the longitudinally slidable support pipe (10) and in two lower and one upper recesses respectively a universal bearing (21, 22, 23) for the telescopic legs (14, 15, 16), and
- a pivotable head (12) which is rotatable about the pipe axis is disposed at the end of the support pipe (10) for the pivotable working spindle (13).

2. Machine tool according to claim 1, **characterized in that** the movable column (4) is movable on the long bed (1) by means of an electrical linear motor.

3. Machine tool according to claim 1 or 2, **characterized in that** the swivel head (12) is rotatable mounted in a bell (11) formed at the end of the support tube (10) and constitutes the support for the working spindle (13) which is pivotable about an additional axis.

4. Machine tool according to claim 3, **characterized in that** the hydraulically extendable parts of the three telescopic legs (14, 15, 16) are movable fixed to the lateral side of the bell (11).

5. Machine tool according to one of the preceding claims, **characterized in that** two work and set-up stations (I and II) are positioned on the rear side of the long bed (1), each comprising a pivotable plate-shaped work carrier (30, 31), and that the respective set-up space is separated from the working are by a one-part sliding door (35) which is alternatively movable in front of the work carrier (31, 32) respectively pivoted-down into its horizontal set-up position.

## Revendications

1. Machine-outil pour l'usinage avec enlèvement de copeaux de pièces de grande surface dressées sur leur chant avec
- un chariot (4), déplaçable sur un banc longitudinal (1) sur un premier axe de coordonnées,
- une unité d'usinage, mobile contre le chariot (4) sur deux autres axes de coordonnées au moins, avec une broche de travail (13) pivotante, et
- au moins un support de pièce pratiquement en forme de plateau (30 ; 31), pouvant pivoter d'une position d'équipement horizontale vers une position d'usinage verticale,
**caractérisée en ce que**
- l'unité d'usinage est une unité tripode avec un mandrin de support central (10) et trois bras d'appui télescopiques (14, 15, 16) décalés selon un angle de 120 °,
- le chariot (4) présente une base (6) large pourvue de patins de guidage ainsi qu'une partie supérieure (7) amincie en forme de toit vers le haut,
- le chariot (4) comporte dans un évidement central un palier universel (9) pour le mandrin de support (10) déplaçable dans le sens de la longueur ainsi qu'un palier universel (21, 22, 23) pour chacun des bras d'appui télescopiques (14, 15, 16) dans deux évidements inférieurs et un évidement supérieur,
- et **en ce qu'**une tête pivotante (12) pour la broche de travail (13) pivotante est disposée à l'extrémité du mandrin de support (10) et peut subir une rotation autour de l'axe de mandrin.

2. Machine-outil selon la revendication 1,
**caractérisée en ce que**
le chariot (4) est déplaçable sur le banc longitudinal (1) au moyen d'un moteur électrique linéaire.

3. Machine-outil selon la revendication 1 ou 2,
**caractérisée en ce que**
la tête pivotante (12) est montée de manière à pouvoir subir une rotation dans une cloche (11) formée à l'extrémité du mandrin de support (10), et forme un support pour la broche de travail (13) pivotant autour d'un axe supplémentaire.

4. Machine-outil selon la revendication 3,
**caractérisée en ce que**
les pièces hydrauliquement sortables des trois bras d'appui télescopiques (14, 15, 16) sont latéralement fixées sur la cloche (11) de manière à rester mobiles.

5. Machine-outil selon l'une des revendications précédentes,
**caractérisée en ce que**
deux stations d'équipement et de travail (I et II) sont disposées derrière le banc longitudinal (1), présentant chacune un support de pièce (30, 31) pivotant en forme de plateau et **en ce que** le compartiment d'équipement correspondant est séparé de la zone de travail par une porte coulissante formée d'une pièce (35), pouvant être coulissée en alternance devant le support de pièce (31, 32) rabattu dans sa position d'équipement horizontale.
